(19) Europäisches Patentamt
European Patent Office
Office européen des brevets

(11) Publication number: **0 024 120**
**B1**

(12) # EUROPEAN PATENT SPECIFICATION

(45) Date of publication of patent specification: **06.04.83**

(51) Int. Cl.³: **C 08 L 71/04**, C 08 L 77/00 //C08G81/00

(21) Application number: **80302471.0**

(22) Date of filing: **21.07.80**

(54) **Resin compositions comprising polyphenylene oxide, polyamide and a compound improving the impact resistance.**

(30) Priority: **08.08.79 JP 101682/79**
**26.09.79 JP 124574/79**
**23.06.80 JP 85634/80**

(43) Date of publication of application:
**25.02.81 Bulletin 81/8**

(45) Publication of the grant of the patent:
**06.04.83 Bulletin 83/14**

(84) Designated Contracting States:
**BE DE FR GB IT NL**

(56) References cited:
**DE - A - 1 520 019**
**GB - A - 1 110 195**
**US - A - 3 660 531**

**CHEMICAL ABSTRACTS, vol. 78, no. 16, 23-04-1973, page 39, abstract 98533j, Columbus, Ohio, US**

**CHEMICAL ABSTRACTS, vol. 78, no. 8, 26th February, 1973, page 37, abstract no. 44515m, Columbus, Ohio, US**

(73) Proprietor: **SUMITOMO CHEMICAL COMPANY, LIMITED**
**15 Kitahama 5-chome Higashi-ku**
**Osaka-shi Osaka-fu (JP)**

(72) Inventor: **Ueno, Katsuji**
**17-20, Hirakatakaminocho**
**Hirakata-shi (JP)**
Inventor: **Maruyama, Takashi**
**11-8-208, Sonehigashinocho-2-chome**
**Toyonaki-shi (JP)**

(74) Representative: **Goldin, Douglas Michael et al,**
**J.A. KEMP & CO. 14, South Square Gray's Inn**
**London WC1R 5EU (GB)**

**EP 0 024 120 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Resin compositions comprising polyphenylene oxide, polyamide and a compound improving the impact resistance

The present invention relates to resin compositions comprising polyphenylene oxide, polyamide and a compound having a specified structure.

A polyphenylene oxide is a resin having excellent thermal, mechanical and electrical properties, and commercially it is blended with a polystyrene and put on the market as Noryl resin by General Electric Company. But, polyphenylene oxide and its modified product, Noryl resin, have a drawback that they are poor in solvent resistance, and therefore their use for certain usages is limited at present irrespective of their excellent other characteristics. The improvement of the drawback is therefore strongly desired.

For the reasons as described above, the inventors extensively studied to develop a polyphenylene oxide having an improved solvent resistance without doing a great damage to the characteristics of the resin. As a result, it was found that such the resin can be obtained by melt-blending a polyphenylene oxide and a polyamide in a specified mixed ratio. The resin composition thus obtained shows no phase separation on processing and has excellent solvent resistance, but it is a little poor in impact resistance in certain usages. As a result of a further study to improve this drawback, the inventors found that the melt-blended product of a mixture of polyphenylene oxide, polyamide and a compound having a specified structure is superior in mechanical properties such as impact resistance to the aforesaid melt-blended product of a simple mixture of polyphenylene oxide and polyamide.

The reason why the resin composition obtained according to the present invention is superior in mechanical strength to the melt-blended product of a simple mixture of polyphenylene oxide and polyamide, is not clear. From the electron microscopic observation of both resin compositions, however, it is presumed that graft reaction has probably taken place between polyphenylene oxide and polyamide in the case of the resin composition of the present invention. Because it is observed that both polyphenylene oxide region and polyamide region of the present resin composition are in a markedly fine disperse state as compared with the simple mixture.

For the purpose of giving impact resistance to a resin, a method of blending the resin and a rubbery polymer is frequently employed in general. But, a composition comprising polyphenylene oxide, polyamide and a rubbery polymer showed a low impact resistance. The inventors found, however, that the impact resistance of the composition can be improved by adding a compound having a specified structure. The inventors thus attained to the present invention.

An object of the present invention is to provide a polyphenylene oxide/polyamide composition superior not only in solvent resistance but also in impact resistance. Other objects and advantages of the present invention will become apparent from the following description.

According to the present invention, there is provided a resin composition comprising a resin composition comprising 5 to 95% by weight of polyphenylene oxide and 95 to 5% by weight of polyamide and 0.01 to 30 parts by weight of a member selected from the group consisting of (A) liquid diene polymers, (B) epoxy compounds and (C) compounds having in the molecule both of (a) an ethylenic carbon-carbon double bond or a carbon-carbon triple bond and (b) a carboxylic acid, acid anhydride, acid amide, imido, carboxylic ester, amino or hydroxyl group per 100 parts by weight of the total of polyphenylene oxide and polyamide.

The present invention will be illustrated in more detail.

As polyphenylene oxide used in the present invention, the well-known ones may satisfactorily be used. It can easily be produced by the methods disclosed in U.S. Patent Nos. 3,306,875, 3,337,501 and 3,787,361. For example, it can be obtained by oxidation-polymerizing a phenol compound of the formula,

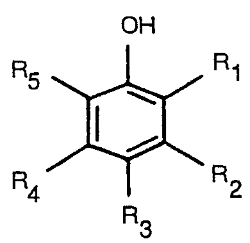

wherein $R_1$, $R_2$, $R_3$, $R_4$ and $R_5$ are each a hydrogen, halogen atom, a hydrocarbon or substituted hydrocarbon group and one of them is a hydrogen atom, with oxygen or an oxygen-containing gas in the presence of an oxidation-coupling catalyst.

As specific examples of $R_1$, $R_2$, $R_3$, $R_4$ and $R_5$ in the above formula, there may be given for example hydrogen, chlorine, fluorine, bromine and iodine atoms, and methyl, ethyl, propyl, butyl, chloroethyl, hydroxyethyl, phenylethyl, benzyl, hydroxymethyl, carboxyethyl, methoxycarbonylethyl, cyanoethyl, phenyl, chlorophenyl, methylphenyl, dimethylphenyl and ethylphenyl groups.

As specific examples of the phenol compound, there may be given for example phenol, o-, m- or p-cresol, 2,6-, 2,5-, 2,4- or 3,5-dimethylphenol, 2-methyl-6-phenylphenol, 2,6-diphenylphenol, 2,6-diethylphenol, 2-methyl-6-ethylphenol and 2,3,5-, 2,3,6- or 2,4,6-trimethylphenol. These phenol compounds may be used as a mixture of them.

Also, phenol compounds other than those represented by the above formula, for example dihydric phenols (e.g. bisphenol A, tetrabromobisphenol A, resorcinol, hydroquinone) may be copolymerized with those represented by the above formula.

The oxidation-coupling catalyst used in the oxidation-polymerization of the phenol compound is not particularly limited, and any of those acting as a catalyst on the polymerization can be used. As typical examples of the catalyst, there may be given for example catalysts comprising a cuprous salt and a tertiary amine (e.g. cuprous chloride-trimethylamine, cuprous acetate-triethylamine, cuprous chloride-pyridine), catalysts comprising cupric salt-tertiary amine and an alkali metal hydroxide (e.g. cupric chloride-pyridine-potassium hydroxide), catalysts comprising a manganese salt and a primary amine (e.g. manganese chloride-ethanolamine, manganese acetate-ethylenediamine), catalysts comprising a manganese salt and alcoholate or phenolate (e.g. manganese chloride-sodium methylate, manganese chloride-sodium phenolate) and catalysts comprising combination of cobalt salt and a tertiary amine.

As specific examples of the polyphenylene oxide, there may be given, for example, poly(2,6-dimethyl-1,4-phenylene oxide), poly(2-methyl-1,4-phenylene oxide), poly(3-methyl-1,4-phenylene oxide), poly(2,6-diethyl-1,4-phenylene oxide), poly(2,6-dipropyl-1,4-phenylene oxide), poly(2-methyl-6-allyl-1,4-phenylene oxide), poly(2,6-dichloromethyl-1,4-phenylene oxide), poly(2,3,6-trimethyl-1,4-phenylene oxide), poly(2,3,5,6-tetramethyl-1,4-phenylene oxide), poly(2,6-dichloro-1,4-phenylene oxide), poly(2,6-diphenyl-1,4-phenylene oxide), and poly(2,5-dimethyl-1,4-phenylene oxide).

Copolymers of the phenol compounds also may be used.

Polyamide used in the present invention is one having a

$$-\underset{\underset{O}{\|}}{C}-NH-$$

linkage in the main chain, and any of the well-known ones which are fusible by heating can be used. Typical examples of polyamide include for example 4-nylon, 6-nylon, 6,6-nylon, 12-nylon, 6,10-nylon, polyamides resulting from terephthalic acid and trimethyl hexamethylenediamine, polyamides resulting from adipic acid and meta-xylylenediamine, polyamides resulting from adipic acid, azelaic acid and 2,2-bis-(p-aminocyclohexyl)propane and polyamides resulting from terephthalic acid and 4,4′-diaminodicyclohexylmethane.

The blending ratio of polyphenylene oxide to polyamide is 5 to 95 wt%, preferably 30 to 70 wt%, of the former to 95 to 5 wt%, preferably 70 to 30 wt%, of the latter. When polyamide is less than 5 wt%, its effect to improve the solvent resistance is small, while when it exceeds 95 wt%, thermal properties such as heat distortion temperature tend to become poor.

As the liquid diene polymer used in the present invention, there may be given for example homopolymers of a conjugated diene and copolymers of the conjugated diene and at least one member selected from the group consisting of other conjugated dienes, olefins, aromatic vinyl compounds and acetylenic compounds, having a number average molecular weight of 150 to 10,000, preferably 150 to 5,000. These homopolymers and copolymers can be produced, for example, by the well-known methods in U.S. Patent Nos. 4,054,612, 3,876,721 and 3,428,699.

As specific examples of the homopolymers of a conjugated diene and copolymers of fellow conjugated dienes, there may be given for example homopolymers of butadiene, isoprene, 1,3-pentadiene, cyclopentadiene, 2,3-dimethylbutadiene, chloroprene or 2-phenylbutadiene, and copolymers of these fellow conjugated dienes.

Copolymers of a conjugated diene and an olefin include for example copolymers comprising the foregoing conjugated diene and at least one member selected from olefins consisting of ethylene, propylene, butene-1, isobutylene, pentene-1, hexene-1, heptene-1, octene-1 and dodecene-1.

Copolymers of a conjugated diene and an aromatic vinyl compound include for example styrene/butadiene copolymers, isoprene/styrene copolymers, butadiene/isoprene/styrene copolymers, 1,3-pentadiene/styrene copolymers, butadiene/$\alpha$-methylstyrene copolymers, isoprene/$\alpha$-methylstyrene copolymers and butadiene/p-hydroxystyrene copolymers.

Although the micro structure of the double bond of these liquid diene polymers contains a vinyl group, trans-1,4-structure and cis-1,4 structure in different proportions, all these polymers are included in the scope of the present invention independent of the micro structure.

As the epoxy compound used in the present invention, the well-known ones, for example (1) epoxy resins produced by condensing polyhydric phenols and epichlorohydrin, (2) epoxy resins produced by condensing polyhydric alcohols and epichlorohydrin, (3) glycidyletherified products of monohydric phenols or monohydric alcohols, (4) glycidyl derivatives of amine compounds and (5) epoxidized products of higher olefins or cycloalkenes, can be used.

Typical examples of the epoxy resins (1) include for example condensates resulting from bisphenol A and epichlorohydrin (commercial products include for example Sumi-epoxy ELA—115,

ELA—127, ELA—128, ELA—134, ESA—011, ESA—014, ESA—017 and ESA—019 produced by Sumitomo Chemical Co.), condensates resulting from resorcinol and epichlorohydrin, condensates resulting from hydroquinone and epichlorohydrin, condensates resulting from tetrabromobisphenol A and epichlorohydrin and the glycidyletherified products of phenol novolak or cresol novolak (commercial products include for example Sumi-epoxy ESCN—220 series products produced by Sumitomo Chemical Co.).

As typical examples of a polyhydric alcohol used for producing the epoxy resins (2), there may be given for example ethylene glycol, propylene glycol, butylene glycol, polyethylene glycol, polypropylene glycol, glycerin, trimethylolethane, trimethylolpropane and pentaerythritol.

The glycidyletherified products (3) include for example phenyl glycidyl ether, butyl glycidyl ether and cresyl glycidyl ether. The glycidyl derivatives of amine compounds (4) are put on the market, for example, in the name of Sumi-epoxy ELN—125 (produced by Sumitomo Chemical Co.) which is a digylcidyl derivative of aniline.

Further, condensates between dihydric phenols and epichlorohydrin having a fairly high molecular weight, for example those put on the market as phenoxy resin (produced by Union Carbide Corp.), can also be used. Still further, other epoxidized compounds, for example epoxy derivatives of natural unsaturated oils (e.g. soybean oil) and those of the foregoing low molecular weight diene polymers, can be used.

As specific examples of the specified compound having both of (a) an ethylenic carbon-carbon double bond or a carbon-carbon triple bond and (b) a carboxylic acid, acid anhydride, acid amide, imido, carboxylic acid ester, amino or hydroxyl group, there may be given for example maleic anhydride, maleic acid, fumaric acid, maleimide, maleic hydrazide and reaction products resulting from a diamine and maleic anhydride, maleic acid, fumaric acid, maleimide or maleic hydrazide for example compounds of the formulae,

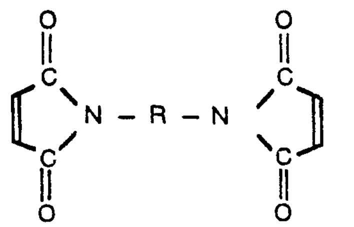 , 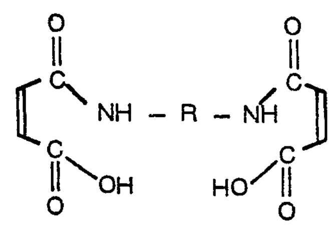

wherein R is an alkylene or arylene group having up to 20 carbon atoms or

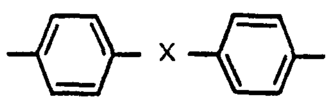 (wherein X is —O—, —$SO_2$—, —$CH_2$— or 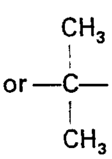 );

methylnadic anhydride, dichloromaleic anhydride, maleic acid amide and natural fats and oils (e.g. soybean oil, tung oil, castor oil, linseed oil, hempseed oil, cotton seed oil, sesame oil, rapeseed oil, peanut oil, camellia oil, olive oil, coconut oil, sardine oil); unsaturated carboxylic acids (e.g. acrylic acid, butenoic acid, crotonic acid, vinylacetic acid, methacrylic acid, pentenoic acid, angelic acid, tiglic acid, 2-pentenoic acid, 3-pentenoic acid, $\alpha$-ethylacrylic acid, $\beta$-methylcrotonic acid, 4-pentenoic acid, 2-hexenoic acid, 2-methyl-2-pentenoic acid, 3-methyl-2-pentenoic acid, $\alpha$-ethylcrotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosenoic acid, decosenoic acid, erucic acid, tetracosenoic acid, mycolipenic acid, 2,4-pentadienoic acid, 4-hexadienoic acid, diallylacetic acid, geranic acid, 2,4-decadienoic acid, 2,4-dodecadienoic acid, 9,12-hexadecadienoic acid, 9,12-octadecadienoic acid, hexadecatrienoic acid, linoleic acid, linolenic acid, octadecatrienoic acid, eicosadienoic acid, eicosatrienoic acid, eicosatetraenoic acid, ricinoleic acid, eleostearic acid, oleic acid, eicosapentaenoic acid, erucinic acid, docosadienoic acid, docosatrienoic acid, deconsatetraenoic acid, docosapentaenoic acid, tetracosenoic acid, hexacosenoic acid, hexacodienoic acid, octacosenoic acid); esters, acid amides or anhydrides of these unsaturated carboxylic acids; unsaturated alcohols (e.g. allyl alcohol, crotyl alcohol, methylvinylcarbinol, allylcarbinol, methylpropenylcarbinol, 4-pentene-1-ol, 10-undecene-1-ol, propargyl alcohol, 1,4-pentadiene-3-ol, 1,4-hexadiene-3-ol, 3,5-hexadiene-2-ol, 2,4-hexadiene-1-ol, alcohols of the formulae $C_nH_{2n-5}OH$, $C_nH_{2n-7}OH$, $C_nH_{2n-9}OH$ (wherein n is a positive integer up to 30), 3-butene-1,2-diol, 2,5-dimethyl-3-hexene-2,5-diol, 1,5-hexadiene-3,4-diol, 2,6-octadiene-4,5-diol); unsaturated amines resulting from replacing the —OH group of the above unsaturated alcohols with —$NH_2$ group; and compounds derived from said low molecular weight polymers (average molecular weight, 150 to 10,000, preferably 150 to 5,000) of a diene compound (e.g.

butadiene, isoprene) or high molecular weight polymers (average molecular weight, more than 10,000) of the diene compound, for example adducts resulting from the foregoing polymers and maleic anhydride or phenols, and the amino, carboxylic or hydroxyl group-substituted products of the foregoing polymers. It is a matter of course that the compound of a specified structure defined in the present invention includes those having not less than two of the functional groups of the group (a) (which may be the same or different) and not less than two of the functional groups of the group (b) (which may be the same or different) at the same time.

The foregoing compounds (A), (B) and (C) may be used alone or in combination. The total amount of the compounds is 0.01 to 30 parts by weight, preferably 0.1 to 20 parts by weight, more preferably 0.3 to 10 parts by weight, based on 100 parts by weight of a mixture of polyphenylene oxide and polyamide. When the amount is less than 0.01 part by weight, the effect of the present invention tends to be small, while amounts more than 30 parts by weight tend to lower the softening temperature.

In the present invention, it is desirable to add rubbery high molecular weight polymers in order to further elevate the impact strength. The rubbery high molecular weight polymers include natural and synthetic polymer materials showing elasticity at room temperature. As the specific examples of the rubbery polymer, there may be given for example natural rubbers, butadiene polymers, butadiene/styrene copolymers (including random copolymers, block copolymers and graft copolymers), isoprene polymers, chlorobutadiene polymers, butadiene/acrylonitrile copolymers, isobutylene polymers, isobutylene/butadiene copolymers, isobutylene/isoprene copolymers, acrylic ester polymers, ethylene/propylene copolymers, ethylene/propylene/diene copolymers, thiokol rubber, polysulfide rubber, polyurethane rubber, polyether rubber (e.g. polypropylene oxide) and epichlorohydrin rubber.

These rubbery polymers may be produced by any of the well-known methods (e.g. emulsion polymerization, solution polymerization) using any of the well-known catalysts (e.g. peroxides, trialkylaluminum, lithium halides, nickel catalysts). These rubbery polymers may be used independent of the degree of crosslinking, the proportion of the cis structure, trans structure and vinyl group contained in the micro structure and the average particle size.

Any copolymer of random copolymers, block copolymers, graft copolymers and the like may be used as the rubbery polymer.

Further, in producing these rubbery polymers, monomers such as other olefins, dienes, aromatic vinyl compounds, acrylic acid, acrylic esters and methacrylic esters may be added as an additional component for copolymerization. And the copolymerization may be carried out by any of random copolymerization, block copolymerization, graft copolymerization and the like. As specific examples of the monomers, there may be given for example ethylene, propylene, styrene, chlorostyrene, α-methylstyrene, butadiene, isoprene, chlorobutadiene, butene, isobutylene, methyl acrylate, acrylic acid, ethyl acrylate, butyl acrylate, methyl methacrylate and acrylonitrile. Further, partially modified products of the products of the rubbery polymer of the present invention, for example polybutadiene modified at the end of the chain with a hydroxyl or carboxylic group and partially hydrogenated styrene/butadiene block copolymers, are included in the scope of the present invention.

The amount of the rubbery polymer used in 5 to 100 parts by weight, preferably 5 to 50 parts by weight, based on 100 parts by weight of a mixture of polyphenylene oxide and polyamide. When the amount is less than 5 parts by weight, the effect of the rubbery polymer to improve impact resistance is poor. While when the amount is more than 100 parts by weight, the impact resistance is much improved, but amounts of not more than 100 parts by weight are desirable, considering balance between the impact resistance and other physical properties.

The addition of styrene polymer for a further improvement in the processability of resin is one of the desirable embodiments. Specific examples of the styrene polymer include for example styrene homopolymer, copolymers of styrene and other vinyl compounds and rubber-reinforced polystyrene, the so-called high impact polystyrene.

A method for producing the resin compositions of the present invention is not particularly limited, and the conventional methods are satisfactorily employed. Generally, however, melt-blending methods are desirable. A time and a temperature required for melt-blending are not particularly limited, and they can properly be determined according to the composition of the material. The temperature somewhat varies with the blending ratio of polyphenylene oxide to polyamide, but generally it is within a range of 150° to 350°C. A prolonged time is desirable for mixing, but the deterioration of the resin composition advances. Consequently, the time needs to be determined taking into account these points.

Any of the melt-blending methods may be used, if it can handle molten viscous mass. The method may be applied in either of batchwise form or continuous form. Specifically, extruders, Banbury mixers, rollers, kneaders and the like may be exemplified.

Next, the present invention will be illustrated in more detail with reference to the following examples, which are not however to be interpreted as limiting the invention thereto.

Examples 1 to 5

2,6-Dimethylphenol was dissolved in a mixture of toluene and methanol, and manganese chloride and ethylene diamine were added thereto. Thereafter, oxidation was carried out under an oxygen atmosphere to obtain poly-(2,6-dimethyl-1,4-phenylene oxide) (intrinsic viscosity, 0.55 dl/g in

chloroform). The polyphenylene oxide thus obtained, polyamide (nylon 6,6, produced by Toray Co.) and liquid polybutadiene (SUMIKAOIL 150, produced by Sumitomo Chemical Co.; number average molecular weight, about 1,700; cis-1,4 structure more than 75%, vinyl structure less than 2%) were mixed in proportions described in Table 1 and kneaded at 250° to 300°C for 5 minutes on Brabender Plastograph. The Izod impact values (according to ASTM D—256) of the kneaded products were shown in Table 1.

Comparative example 1

Operation was carried out in the same manner as in Example 1 except that the liquid polybutadiene was not used. The result was shown in Table 1.

TABLE 1

| | Polyphenylene oxide/ nylon 6,6 (weight ratio) | Liquid polybutadiene (PHR*) | Izod impact value (with notch) (kg · cm/cm$^2$) |
|---|---|---|---|
| Example 1 | 7/3 | 1 | 8.6 |
| Example 2 | 6/4 | 3 | 9.3 |
| Example 3 | 5/5 | 1 | 12.1 |
| Example 4 | 4/6 | 0.5 | 11.9 |
| Example 5 | 3/7 | 0.7 | 13.3 |
| Comparative example 1 | 7/3 | 0 | 2.7 |

* PHR: Part by weight per 100 parts by weight of the total of polyphenylene oxide and polyamide.

Example 6

Comparative example 2

Polyphenylene oxide (44 parts by weight), polyamide (44 parts by weight), liquid polybutadiene (1 part by weight), all of which were the same as used in Example 1, and a butadiene/styrene copolymer (12 parts by weight, Solprene 1204, produced by Asahi Kasei Co.) were mixed and kneaded at 280°C for 5 minutes on Brabender Plastograph. The Izod impact value (according to ASTM D—256) was 16.3 kg · cm/cm$^2$. For comparison (Comparative example 2), the same operation as above was repeated except that liquid polybutadiene was not used. The Izod impact value of the kneaded product was 2.7 kg · cm/cm$^2$.

Examples 7 to 14

The same poly-(2,6-dimethyl-1,4-phenylene oxide) and polyamide as used in Example 1 and each of the epoxy compounds in Table 2 were mixed and kneaded at 250° to 300°C for 5 minutes on Brabender Plastograph. The Izod impact value of the kneaded product was measured according to ASTM D—256 in order to show the mechanical strength, and the heat distortion temperature of the product was measured according to ASTM D—648 in order to show the heat resistance. The results were shown in Table 2.

Comparative example 3

Operation was carried out in the same manner as in Example 7 except that the epoxy compound was not used. The result was shown in Table 2.

It is apparent from Table 2 that the impact resistance is improved as compared with the comparative example by adding the epoxy compounds according to the present invention.,

TABLE 2

| | Polyphenylene oxide/nylon 6,6 (weight ratio) | Specified compound | | Izod impact value (kg · cm/cm²) | HDT (°C) |
|---|---|---|---|---|---|
| | | Kind | Amount (PHR) | | |
| Example 7 | 5/5 | Sumi-epoxy ELA—128 | 1 | 10.3 | 135 |
| Example 8 | 4/6 | Phenoxy resin | 1 | 9.3 | 101 |
| Example 9 | 4/6 | Epoxidized soybean oil | 3 | 9.1 | 97 |
| Example 10 | 3/7 | 2-Ethylhexyl glycidyl ether | 0.5 | 8.3 | 95 |
| Example 11 | 7/3 | Polyethylene glycol diglycidyl ether | 2 | 7.9 | 175 |
| Example 12 | 2/8 | Neopentyl glycol diglycidyl ether | 5 | 11.3 | 79 |
| Example 13 | 6/4 | Glycerin diglycidyl ether | 3 | 10.9 | 143 |
| Comparative Example 3 | 5/5 | None | — | 4.1 | 131 |

(Note) HDT: Heat distortion temperature

Examples 14 to 21

The same polyphenylene oxide and polyamide as used in Example 1 and each of the compounds shown in Table 3 were mixed and kneaded at 250° to 300°C for 5 minutes on Brabender Plastograph. In order to know the degree of improvement in solvent resistance, the kneaded product was extracted with chloroform to separate polyphenylene oxide. Also, the Izod impact value of the kneaded product was measured according to ASTM D—256 in order to know mechanical strength, and the heat distortion temperature (HDT) was measured according to ASTM D—648 in order to know heat resistance. The results were shown in Table 3 together with the result of Comparative example 4 using no specified compound.

It is apparent from Table 3 that the method of the present invention improves the graft percentage, solvent resistance and impact resistance as compared with the comparative example.

TABLE 3

| | Polyphenylene oxide/nylon 6,6 (weight ratio) | Specified compound | | Amount of chloroform-extract (wt%) | Izod impact value (with notch) (kg · cm/cm²) | HDT (°C) |
|---|---|---|---|---|---|---|
| | | Kind | Amount (PHR) | | | |
| Example 14 | 5/5 | Adduct (I) of liquid polybutadiene and maleic anhydride *1 | 1 | 0 | 10.3 | 142 |
| Example 15 | 7/3 | Adduct (II) of liquid polybutadiene and maleic anhydride *2 | 3 | 0 | 7.5 | 175 |
| Example 16 | 4/6 | Linseed oil | 1 | 0 | 11.1 | 97 |
| Example 17 | 7/3 | Maleic anhydride | 1 | 2.2 | 6.5 | 175 |
| Example 18 | 6/4 | Linoleic acid | 0.7 | 0 | 6.1 | 151 |
| Example 19 | 5/5 | Oleyl alcohol | 3 | 0 | 8.9 | 142 |
| Example 20 | 4/6 | Adduct of liquid polybutadiene and phenol *3 | 1.5 | 0 | 9.2 | 99 |
| Example 21 | 2/8 | Linolenylamine | 0.8 | 0 | 8.3 | 81 |
| Comparative example 4 | 7/3 | None | — | 25 | 2.7 | 174 |

*1 Product obtained by addition of 1,4-polybutadiene (100 parts by weight; average molecular weight, about 8,000) to maleic anhydride (25 parts by weight).
*2 Product obtained by addition of 1,4-polybutadiene (100 parts by weight; average molecular weight, about 300) to maleic anhydride (10 parts by weight).
*3 Product obtained by addition of 1,4-polybutadiene (100 parts by weight; average molecular weight, about 1,700) to phenol (about 50 parts by weight).

**Claims**

1. A resin composition comprising (1) a resin comprising 5 to 95% by weight of a polyphenylene oxide and 95 to 5% by weight of a polyamide and (2) 0.01 to 30 parts by weight of (A) a liquid diene polymer, or (B) an epoxy compound or (C) a compound having in the molecule both (a) an ethylenic carbon-carbon double bond or a carbon-carbon triple bond and (b) a carboxylic acid, acid anhydride, acid amide, imido, carboxylic acid ester, amino or hydroxyl group, per 100 parts by weight of the total of polyphenylene oxide and polyamide resin (1).

2. A resin composition according to claim 1, wherein said polyphenylene oxide is obtained by oxidation-polymerizing a phenol compound of the formula,

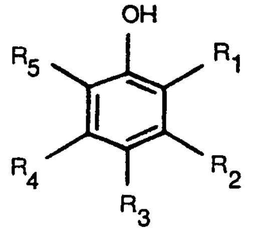

wherein $R_1$, $R_2$, $R_3$, $R_4$ and $R_5$ are each hydrogen or halogen or a hydrocarbon or substituted hydrocarbon group, at least one being hydrogen, with oxygen or an oygen-containing gas in the presence of an oxidation-coupling catalyst.

3. A resin composition according to claim 1 or 2 wherein the weight ratio of polyphenylene oxide to polyamide is 30 to 70 wt% of the former to 70 to 30 wt% of the latter.

4. A resin composition according to any one of the preceding claims, wherein said liquid diene polymer has a number average molecular weight of 150 to 10,000.

5. A resin composition according to claim 4, wherein the liquid diene polymer is a homopolymer of butadiene, isoprene, 1,3-pentadiene, cyclopentadiene, 2,3-dimethyl-butadiene, chloroprene or 2-phenylbutadiene, or a copolymer of at least one of the above-mentioned conjugated dienes, and at least one of ethylene, propylene, butene-1, isobutylene, pentene-1, hexene-1, heptene-1, octene-1 and dodecene-1, styrene/butadiene copolymers, isoprene/styrene copolymers, butadiene/isoprene/styrene copolymers, 1,3-pentadiene/styrene copolymers, butadiene/$\alpha$-methylstyrene copolymers, isoprene/$\alpha$-methylstyrene copolymers and butadiene/p-hydroxystyrene copolymers.

6. A resin composition according to any one of claims 1—3, wherein said epoxy compound is (1) an epoxy resin produced by condensing a polyhydric phenol and epichlorohydrin, (2) an epoxy resin produced by condensing a polyhydric alcohol and epichlorohydrin, (3) a glycidyletherified product of a monohydric phenol or monohydric alcohol, (4) a glycidyl derivative of an amine compound or (5) an epoxidized product of a higher olefin or cycloalkene.

7. A resin composition according to any one of claims 1—3, wherein said compound (C) is maleic anhydride, maleic acid, fumaric acid, maleimide, maleic hydrazide, methylnadic anhydride, dichloromaleic anhydride, maleic acid amide, a natural fat or oil, an unsaturated carboxylic acid ester, acid amide or an anhydride of an unsaturated carboxylic acid, an unsaturated alcohol, an unsaturated amine, a reaction product of a diamine with maleic anhydride, maleic acid, fumaric acid, maleimide or maleic hydrazide, an adduct of a diene polymer with maleic anhydride and phenol or an amino, carboxylic or hydroxyl group-substituted diene polymer.

8. A resin composition according to claim 7, wherein said compound (C) is one represented by the formulae,

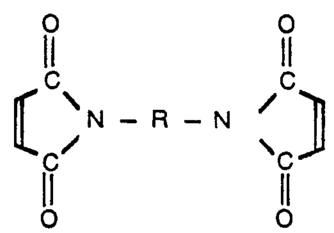

or

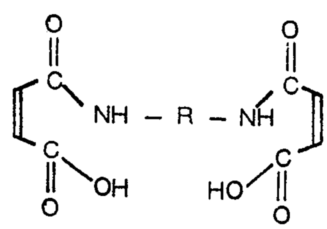

wherein R is an alkylene or arylene group having up to 20 carbon atoms, or

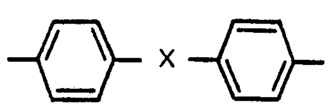 (wherein X is —O—, —$SO_2$—, —$CH_2$— or 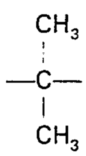 ).

9. A resin composition according to any one of the preceding claims wherein the amount of said compound (A), (B) or (C) is 0.1 to 20 parts by weight per 100 parts by weight of the total of polyphenylene oxide and polyamide resin (1).

10. A resin composition according to claim 9, wherein the amount of said compound (A), (B) or (C) is 0.3 to 10 parts by weight.

11. A resin composition according to any one of the preceding claims, wherein a rubbery polymer is added in an amount of 5 to 100 parts by weight of the total of polyphenylene oxide and polyamide resin (1).

12. A resin composition according to claim 11, wherein the amount of rubbery polymer is 5 to 50 parts by weight.

**Patentansprüche**

1. Eine Harzmasse, umfassend (1) ein Harz, das 5 bis 95 Gewichtsprozent eines Polyphenyloxids und 95 bis 5 Gewichtsprozent eines Polyamids umfaßt, und (2) 0,01 bis 30 Gewichtsteile von (A) einem flüssigen Dienpolymerisat, oder (B) einer Epoxidverbindung oder (C) einer Verbindung, die im Molekül sowohl (a) eine äthylenische Kohlenstoff-Kohlenstoff-Doppelbindung oder eine Kohlenstoff-Kohlenstoff-Dreifachbindung und (b) eine Carbonsäure-, Säureanhydrid-, Säureamid-, Imido-, Carbonsäureester-, Amino- oder Hydroxylgruppe aufweist, pro 100 Gewichtsteile der Gesamtmenge von Polyphenyloxid und Polyamidharz (1).

2. Eine Harzmasse nach Anspruch 1, wobei das Polyphenylenoxid durch Oxidationspolymerisation einer Phenolverbindung der Formel

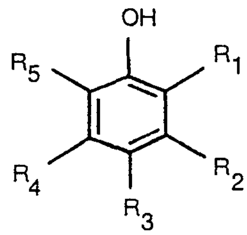

in der $R_1$, $R_2$, $R_3$, $R_4$ und $R_5$ jeweils Wasserstoff oder Halogen oder ein Kohlenwasserstoff- oder substituierter Kohlenwasserstoffrest sind, wobei mindestens einer der Reste Wasserstoff ist, mit Sauerstoff oder einem Sauerstoff enthalgenden Gas in Gegenwart eines Oxidations-Kupplungs-Katalysators erhalten wird.

3. Eine Harzmasse gemäß Anspruch 1 oder 2, wobei das Gewichtsverhältnis von Polyphenylenoxid zu Polyamid 30 bis 70 Gewichtsprozent des Ersteren zu 70 : 30 Gewichtprozent des Letzteren beträgt.

4. Eine Harzmasse nach einem der vorangehenden Ansprüche, wobei das flüssige Dienpolymerisat ein Zahlenmittel des Molekulargewichts von 150 bis 10 000 aufweist.

5. Eine Harzmasse nach Anspruch 4, wobei das flüssige Dienpolymerisat ein Homopolymerisat von Butadien, Isopren, 1,3-Pentadien, Cyclopentadien, 2,3-Dimethyl-butadien, Chloropren oder 2-Phenylbutadien, oder ein Copolymerisat aus mindestens einem der vorstehend erwähnten konjugierten Diene und mindestens einer der Verbindungen Äthylen, Propylen, Buten-1, Isobutylen, Penten-1, Hexen-1, Hepten-1, Octen-1 und Dodecen-1, oder ein Styrol/Butadien-Copolymerisat, Isopren/Styrol-Copolymerisat, Butadien/Isopren/Styrol-Copolymerisat, 1,3-Pentadien/Styrol-Copolymerisat, Butadien/$\alpha$-Methylstyrol-Copolymerisat, Isopren/$\alpha$-Methylstyrol-Copolymerisat oder Butadien/p-Hydroxystyrol-Copolymerisat ist.

6. Eine Harzmasse nach einem der Ansprüche 1 bis 3, wobei die Epoxidverbindung (1) ein durch Kondensation eines mehrwertigen Phenols und Epichlorhydrin hergestelltes (Epoxidharz, (2) ein durch Kondensation eines mehrwertigen Alkohols und Epichlorhydrin hergestelltes Epoxidharz, (3) ein glycidylveräthertes Produkt aus einem einwertigen Phenol oder einwertigem Alkohol, (4) ein Glycydylderivat einer Aminverbindung oder (5) ein epoxidiertes Produkt eines höheren Olefins oder Cycloalkens ist.

7. Eine Harzmasse nach einem der Ansprüche 1 bis 3, wobei die Verbindung (C) Maleinsäureanhydrid, Maleinsäure, Fumarsäure, Maleinimid, Maleinhydrazid, Methylnadinsäureanhydrid, Dichlormaleinsäureanhydrid, Maleinsäureamid, ein natürliches Fett oder Ol, ein ungesättigter Carbonsäureester, ein Säureamid oder ein Anhydrid einer ungesättigten Carbonsäure, ein ungesättigter Alkohol, ein ungesättigtes Amin, ein Umsetzungsprodukt eines Diamins mit Maleinsäureanhydrid, Maleinsäure, Fumarsäure, Maleinimid oder Maleinsäurehydrazid, ein Addukt aus einem Dienpolymerisat mit Maleinsäureanhydrid und Phenol oder einem durch Amino-, Carboxyl- oder Hydroxylgruppen substituierten Dienpolymerisat ist.

8. Eine Harzmasse nach Anspruch 7, wobei die Verbindung (C) eine durch die Formeln

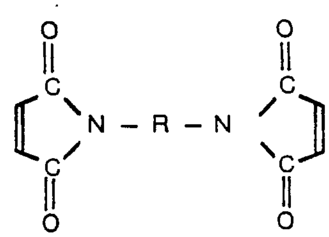

oder

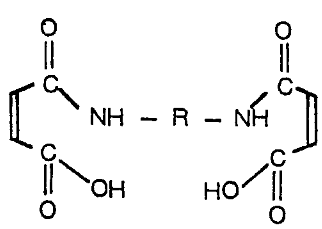

wiedergegebene ist, wobei R ein Alkylen- oder Arylenrest mit bis zu 20 Kohlenstoffatomen oder

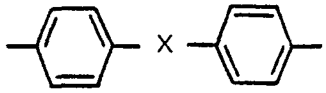

(wobei X —O—, —$SO_2$—, —$CH_2$— oder 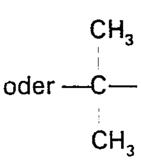

bedeutet), ist.

9. Eine Harzmasse nach einem der vorangehenden Ansprüche, wobei die Menge der Verbindung (A), (B) oder (C) 0,1 bis 20 Gewichtsteile pro 100 Gewichtsteile der Gesamtmenge von Polyphenyloxid und Polyamidharz (1) ist.

10. Eine Harzmasse nach Anspruch 9, wobei die Menge der Verbindung (A), (B) oder (C) 0,3 bis 10 Gewichtsteile beträgt.

11. Eine Harzmasse nach einem der vorangehenden Ansprüche, wobei ein kautschukartiges Polymerisat in einer Menge von 5 bis 100 Gewichtsteilen pro 100 Gewichtsteile der Gesamtmenge von Polyphenyloxid und Polyamidharz (1) zugesetzt wird.

12. Eine Harzmasse nach Anspruch 11, wobei die Menge an kautschukartigem Polymerisat 5 bis 50 Gewichtsteile beträgt.

**Revendications**

1. Composition de résine, caractérisé en ce qu'elle comprend: (1) une résine faite de 5 à 95% en poids d'un oxyde de polyphénylène et de 95 à 5% en poids d'un polyamide, et (2) 0,01 à 30 parties en poids de (A) un polymère de diène liquide, ou (B) un composé époxy ou (C) un composé présentant à la fois, dans la molécule, (a) une double liaison carbone-carbone éthylénique ou une triple liaison carbone-carbone et (b) un groupe acide carboxylique, anhydride d'acide, amide d'acide, imido, ester d'acide carboxylique, amino ou hydroxyle, pour 100 parties en poids du total de la résine (1) d'oxyde de polyphénylène et de polyamide.

2. Composition de résine selon la revendication 1, caractérisée en ce que l'oxyde de polyphénylène est obtenu par polymérisation par oxydation d'un composé phénolique de formule

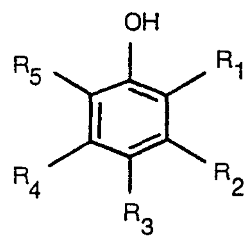

dans laquelle $R_1$, $R_2$, $R_3$, $R_4$ et $R_5$ représentent chacun un atome d'hydrogène ou d'halogène ou un groupe hydrocarboné ou hydrocarboné substitué, l'un au moins de ces symboles représentant un hydrogène, avec de l'oxygène ou un gaz contenant de l'oxygène, en présence d'un catalyseur d'enchaînement par oxydation.

3. Composition de résine selon la revendication 1 ou 2, caractérisée en ce que le rapport pondéral de l'oxyde de polyphénylène au polyamide est de 30 à 70% en poids du premier pour 70 à 30% en poids du second.

4. Composition de résine selon l'une quelconque des revendications 1 à 3, caractérisée en ce que le polymère de diène liquide a un poids moléculaire moyen se situant entre 150 et 10 000.

5. Composition de résine selon la revendication 4, caractérisée en ce que le polymère de diène liquide est un homopolymère de butadiène, d'isoprène, de 1,3-pentadiène, de cyclopentadiène, de 2,3-diméthyl-butadiène, de chloroprène ou de 2-phénylbutadiène, ou un copolymère de l'un au moins des diènes conjugués précités et de l'un au moins des produits suivants: éthylène, propylène, butène-1, isobutylène, pentène-1, hexène-1, heptène-1, octène-1 et dodécène-1, copolyméres de styrène/butadiène, copolymères d'isoprène/styrène, copolymères de butadiène/isoprène/styrène, copolymères de 1,3-pentadiène/styrène, copolymères de butadiène/$\alpha$-méthylstyrène, copolymères d'isoprène/$\alpha$-méthylstyrène et copolymères de butadiène/p-hydroxystyrène.

6. Composition de résine selon l'une quelconque des revendications 1 à 3, caractérisée en ce que le composé époxy est: (1) une résine époxy obtenue par condensation d'un polyphénol et d'épichlorhydrine, (2) une résine époxy obtenue par condensation d'un polyalcool et d'épichlorhydrine, (3) un produit glycidyléthérifié d'un monophénol ou d'un monoalcool, (4) un dérivé glycidylique d'un composé aminé ou (5) un produit époxydé d'une oléfine ou d'un cycloalcène supérieur.

7. Composition de résine selon l'une quelconque des revendications 1 à 3, caractérisée en ce que le composé (C) est l'anhydride maléique, l'acide maléique, l'acide fumarique, le maléimide, l'hydrazide maléique, l'anhydride méthylnadique, l'anhydride dichloromaléique, l'amide d'acide maléique, une graisse ou huile naturelle, un ester d'acide carboxylique insaturé, un amide ou un anhydride d'acide carboxylique insaturé, un alcool insaturé, une amine insaturée, un produit de réaction d'une diamine avec l'anhydride maléique, l'acide maléique, l'acide fumarique, le maléimide ou l'hydrazide maléique, un produit d'addition d'un polymère de diène avec l'anhydride maléique et un phénol, ou un polymère de diène substitué par un groupe amino, carboxylique ou hydroxyle.

8. Composition de résine selon la revendication 7, caractérisée en ce que le composé (C) est l'un de ceux qui sont représentés par les formules

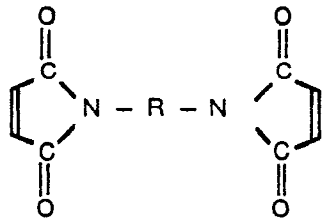 ou 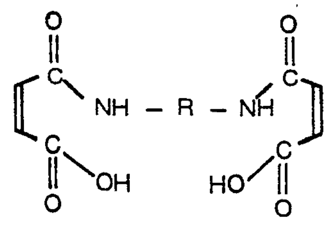

dans lesquelles R représente un groupe alcoylène ou arylène contenant jusqu'à 20 atomes de carbone, ou

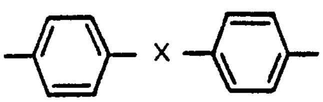 (dans laquelle X est mis pour —O—, —$SO_2$—, —$CH_2$— ou 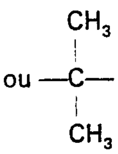 ).

9. Composition de résine selon l'une quelconque des revendications 1 à 8, caractérisée en ce que la proportion du composé (A), (B) ou (C) est de 0,1 à 20 parties en poids pour 100 parties en poids du total de la résine (1) d'oxyde de polyphénylène et de polyamide.

10. Composition de résine selon la revendication 9, caractérisée en ce que la proportion du composé (A), (B) ou (C) est de 0,3 à 10 parties en poids.

11. Composition de résine selon l'une quelconque des revendications 1 à 10, caractérisée en ce qu'un polymère caoutchouteux y est ajouté dans une proportion de 5 à 100 parties en poids pour 100 parties en poids du total de la résine (1) d'oxyde de polyphénylène et de polyamide.

12. Composition de résine selon la revendication 11, caractérisée en ce que la proportion de polymère caoutchouteux est de 5 à 50 parties en poids.